# EUROPEAN PATENT SPECIFICATION

(11) **EP 2 050 659 B1**
(45) Date of publication and mention of the grant of the patent: **18.11.2009**
(21) Application number: 08018190.2
(22) Date of filing: 16.10.2008
(51) Int. Cl.: B62D 25/04, B60R 13/02

(54) **Vehicle body frame structure**
Fahrzeugkarosseriestruktur
Structure de châssis de véhicule

(30) Priority: 19.10.2007 JP 2007272627
(43) Date of publication of application: 22.04.2009
(73) Proprietor: HONDA MOTOR CO., LTD., Tokyo 107-8556 (JP)
(72) Inventor: Tomozawa, Kosaku, Wako-shi Saitama, 351-0193 (JP)
(74) Representative: Prechtel, Jörg

(56) References cited:
- EP-A- 0 974 495
- WO-A-01/58741
- DE-A1-102004 032 599
- JP-A- 2000 142 289
- JP-A- 2006 273 145

## Description

The present invention relates to an A-pillar or other vehicle body frame structure comprised of an outer panel, inner panel, stiffener panel, or the like, and having a closed cross section structure.

Generally, an A-pillar or other vehicle body frame structure is composed of an outer panel disposed on the vehicle exterior, an inner panel disposed in the vehicle interior, and a stiffener panel provided between the outer and inner panels.

It is necessary to ensure that this type of vehicle body frame structure has some resistance to buckling under load.

It is known that a structure in which a foam material is provided in the space between the inner panel and the stiffener panel is disclosed as such a vehicle body frame structure in Japanese Patent Application Laid-Open Publication No. 2005-238991 (JP 2005-238991 A).

The vehicle body frame structure disclosed in JP 2005-238991 A is comprised of an A-pillar, and a foam material (structural foam filler) is interposed between the inner panel and the stiffener panel.

In the vehicle body frame structure, the space between the inner panel and the stiffener panel is filled with the foam material, and the closed longitudinal space formed between the inner panel and the stiffener panel is isolated (within a closed cross section). When, for example, a bending load is applied to the A-pillar, buckling is impeded and an action that facilitates deformation is evident, but an effective structure is still required in which buckling would be even more difficult to occur and an even more adequate deformation would be possible.

In EP 0 974 495 a vehicle body frame structure according to the preamble of claims 1 and 3 is disclosed.

An object of the present invention is to provide a vehicle body frame structure in which deformation of a closed cross section is suppressed (buckling is difficult to occur) when a load is applied, and the load is adequately absorbed.

According to one aspect of the present invention, there is provided a vehicle body frame structure comprising: a vehicle body frame having two closed cross sections partitioned by a reinforcement panel, barriers spot welded to the front and back of the reinforcement panel, and structural foam fillers interposed between the barriers and the vehicle body frame, wherein the barriers and the structural foam fillers isolate each of the two closed cross sections in a longitudinal direction of the vehicle body frame.

The vehicle body frame structure comprises three parts such as, for example, an outer panel, an inner panel, and a stiffener, and has two closed cross sections. Barriers are provided to the two closed cross sections formed in the vehicle body frame structure, the barriers are bonded by spot welding to the front and back of the stiffener, and the structural foam fillers are also used to cover the two closed cross sections. Therefore, even if, for example, a bending load is applied to the vehicle body frame, it is difficult for the two closed cross sections to buckle, and the load is adequately absorbed. In other words, a bending load applied to the structure can be stopped while being absorbed.

The barriers and the structural foam fillers are preferably provided to a part of the two closed cross sections aligned in a longitudinal direction of the vehicle body frame.

According to another aspect of the present invention, there is provided a vehicle body frame structure comprising: an outer panel disposed on the vehicle exterior; an inner panel disposed in the passenger compartment; a stiffener panel provided between the outer panel and the inner panel; a first closed cross section formed by the inner panel and the stiffener panel; a second closed cross section formed by the outer panel and the stiffener panel; a first barrier for isolating the first closed cross section in a longitudinal direction, the barrier being spot welded to one of the front and back of the stiffener panel, a first structural foam filler disposed between the first barrier and the inner panel; a second barrier for isolating the second closed cross section in a longitudinal direction, the barrier being spot welded to the other of the front and back of the stiffener panel; and a second structural foam filler disposed between the second barrier and the outer panel.

The stiffener panel is provided with enhanced stiffness because the first and second barriers are spot welded to the stiffener panel. The inner panel positioned in the passenger compartment (back surface) can deform within a fixed range because the space between the inner panel and the first barrier on the side of the passenger compartment is filled with the first structural foam filler. The outer panel positioned in the vehicle exterior (front surface) can deform within a fixed range because the space between the outer panel and the second barrier on the side of the vehicle exterior is filled with the second structural foam filler.

The cross sectional deformation of the vehicle body frame and other parts of the structure composed of the outer panel, inner panel, and stiffener panel is impeded (buckling is difficult to occur). As a result, a (bending) load applied to the structure can be stopped while being absorbed.

The first and second barriers are each preferably welded at the same position on the front and back of the stiffener panel when the barriers are welded to the front and back of the stiffener panel. Therefore, the first and second barriers can be spot welded to the stiffener panel at the same time. As a result, it is possible to make it easier to assemble a vehicle body frame or other structure composed of an outer panel, inner panel, and stiffener panel.

The first and second barriers are preferably bent parts. The first and second barriers can therefore be easily manufactured, and the degree of design freedom is enhanced.

Certain preferred embodiments of the present invention will be described in detail below, by way of example only, with reference to the accompanying drawings, in which:
FIG. 1 is a perspective view showing part of a vehicle body employing a vehicle body frame structure according to the present invention;
FIG. 2 is a cross sectional view taken along line 2-2 of FIG. 1;
FIG. 3 is an exploded perspective view showing the vehicle body frame structure of FIG. 2;
FIGS. 4(a) through (f) are schematic views showing comparisons among a general A-pillar, a prior-art A-pillar and the A-pillar according to the present embodiment;
FIG. 5 is a view showing a comparison of the effect of suppressing deformation in the general A-pillar, prior-art A-pillar and the A-pillar according to the present embodiment; and
FIG. 6 is an exploded perspective view of a vehicle body frame structure according to another embodiment of the present invention.

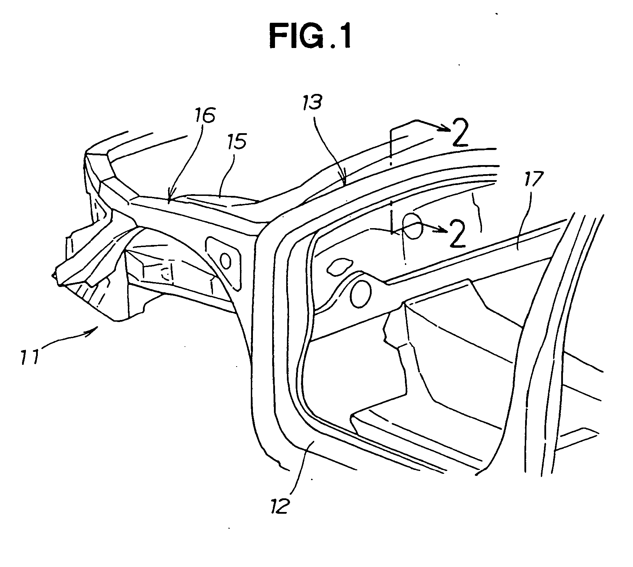

As shown in FIGS. 1, 2, and 3, a vehicle frame 11 has a side sill 12 provided underneath a lateral part, an A-pillar 13 rising vertically from a front end of the side sill 12 and having a distal end thereof slanting toward the rear, a front upper member 16 extended forward from the front of A-pillar 13 and connected to a damper housing 15 of a suspension (not shown), and a cross-member 17 connected to the A-pillar 13 and extended side to side.

The vehicle body frame structure according to the present embodiment will now be described using the A-pillar 13 as an example.

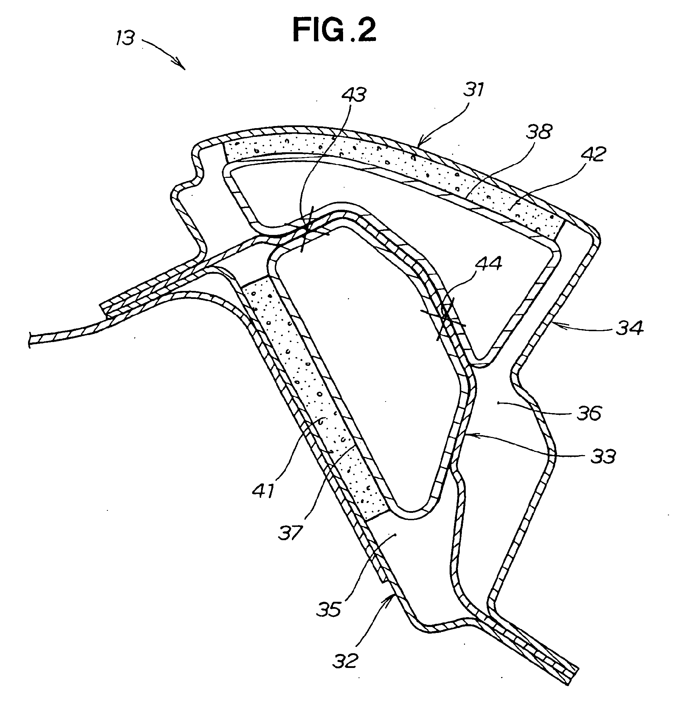

The A-pillar 13, as described in FIG. 2, comprises an outer panel 31 disposed on the vehicle exterior; an inner panel 32 disposed in the passenger compartment; a stiffener panel 33 (reinforcement panel) provided between the outer panel 31 and the inner panel 32; a first closed cross section 35, which is formed by the inner panel 32 and the stiffener panel 33; a second closed cross section 36, which is formed by the outer panel 31 and the stiffener panel 33; a first barrier 37 provided to the interior of the first closed cross section 35, a first structural foam filler 41 disposed between the first barrier 37 and the inner panel 32; a second barrier 38 provided to the interior of the second closed cross section 36; and a second structural foam filler 42 disposed between the second barrier 38 and the outer panel 31.

A vehicle body frame 34 is composed of the outer panel 31, the inner panel 32, and the stiffener panel 33.

The first barrier 37 is spot welded to the stiffener panel 33 to isolate the first closed-cross section 35, which is aligned in a longitudinal direction of the vehicle body frame 34, so as to partition off the section.

The second barrier 38 is spot welded to the stiffener panel 33 to isolate the second closed-cross section 36, which is aligned in a longitudinal direction of the vehicle body frame 34, so as to partition off the section.

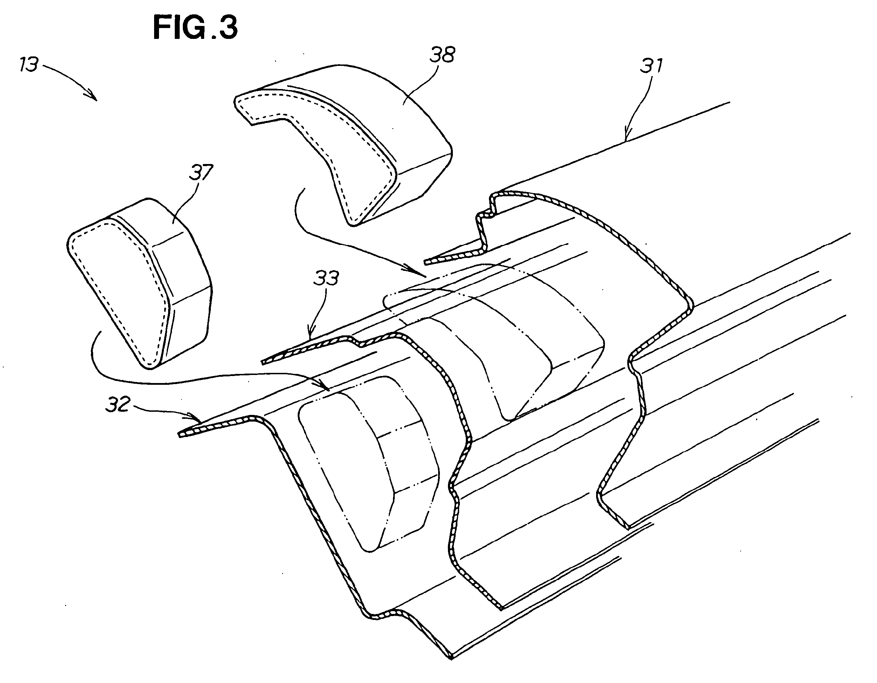

The first and second barriers 37, 38 are formed in an irregular cylindrical shape from a deep-drawn plate, as shown in FIG. 3. Furthermore, the first and second barriers 37, 38 are spot welded to the front and back of the stiffener panel 33, and are welded to the front and back at the same position on the stiffener, panel 33 at a top spot weld 43 (FIG. 2) and a bottom spot weld 44.

In other words, in the A-pillar 13 shown in FIG. 2, the two closed cross sections 35 and 36, which are aligned in the longitudinal direction of the vehicle body frame 34, are cut off by the barriers 37 and 38 spot welded (spot welds 43 and 44) to the front and back of the stiffener panel 33, as well as by the structural foam fillers 41 and 42, in a vehicle body frame structure having two closed cross sections formed by the stiffener panel 33.

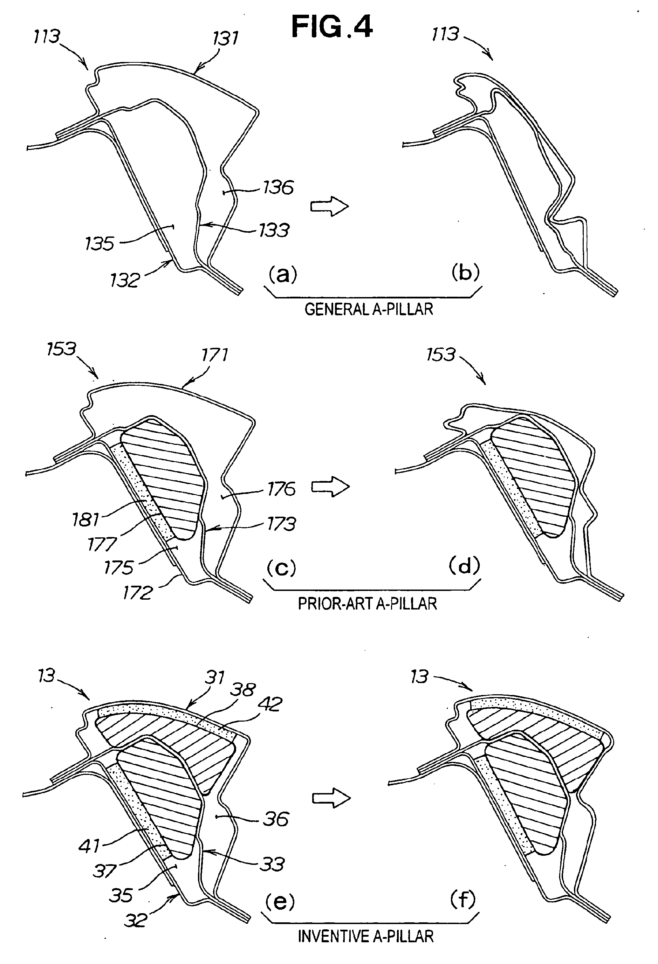

FIGS. 4(a) and 4(b) show a general A-pillar 113. FIGS. 4(c) and 4(d) show an A-pillar 153 provided with a barrier 177 in a first closed cross section 175 formed by conventional inner panel 172 and stiffener panel 173. FIGS. 4(e) and 4(f) show the A-pillar 13 according to the present embodiment.

The A-pillar 113 in FIG. 4(a) comprises an outer panel 131 disposed on the vehicle exterior; an inner panel 132 disposed in the passenger compartment; a stiffener panel 133 provided between the outer panel 131 and the inner panel 132; a first closed cross section 135 formed by the inner panel 132 and the stiffener panel 133; and a second closed cross section 136 formed by the outer panel 131 and the stiffener panel 133.

In FIG. 4(b), a large bending load cannot be supported because the closed cross section of the A-pillar 113 is greatly deformed (buckled) when the load is applied to the center of the outer panel of the A-pillar 113.

In FIG. 4(c), the A-pillar 153 comprises an outer panel 171 disposed on the vehicle exterior; an inner panel 172 disposed in the passenger compartment; a stiffener panel 173 provided between the outer panel 171 and the inner panel 172; a first closed cross section 175 formed from the inner panel 172 and the stiffener panel 173; a second closed cross section 176 formed from the outer panel 172 and the stiffener panel 173; a barrier 177 provided to the interior of the first closed cross section 175 and spot welded to the stiffener panel; and a structural foam filler 181 disposed between the barrier 177 and the inner panel 172.

In FIG. 4(d), the barrier 177 and the foam filler 181 are provided to the first closed cross section 175 of the A-pillar 153. Therefore, deformation (buckling) of the first closed cross section 175 of the A-pillar 153 can be impeded to a degree, and a predetermined bending load can be supported when the load is applied to the outer panel 171.

In FIG. 4(e), the A-pillar 13 according to the present embodiment comprises a first barrier 37 provided to a first closed cross section 35 and spot welded to the stiffener panel 33; a first structural foam filler 41 disposed between the first barrier 37 and the inner panel 32; a second barrier 38 provided to a second closed cross section 36 and spot welded to the stiffener panel 33; and a second structural foam filler 42 disposed between the second barrier 38 and the outer panel 31.

In FIG. 4(f), deformation (buckling) of a closed cross section of the A-pillar 13 can be impeded and a large bending load can be supported when the load is applied to the outer panel. Therefore, a (bending) load applied to the A-pillar 13 can be stopped while being absorbed.

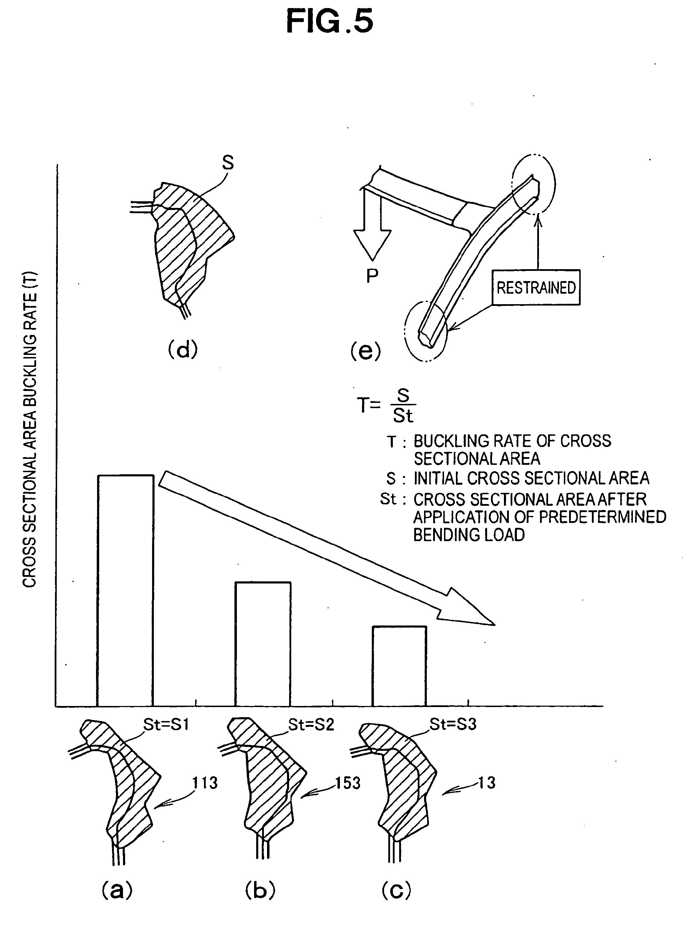

FIGS. 5(a) through 5(e) show an example comparing the effect of suppressing the deformation of the A-pillar shown in FIGS. 4(a) and 4(b), the A-pillar shown in FIGS. 4(c) and 4(d), and the A-pillar according to the present embodiment in FIGS. 4(e) and 4(f).

FIG. 5(a) shows the cross sectional area after a predetermined bending load has been applied to the A-pillar 113 shown in FIG. 4(b); FIG. 5(b) shows the cross sectional area after a predetermined bending load has been applied to the A-pillar 153 shown in FIG. 4(d); and FIG. 5(c) shows the cross sectional area after a predetermined bending load has been applied to the A-pillar 13 according to the present embodiment shown in FIG. 4(f).

FIG. 5(d) shows the initial cross sectional area S of the A-pillar 113 in FIG. 4(a), the A-pillar 153 in FIG. 4(c), and the A-pillar according to the present embodiment in FIG. 4(e). These initial cross sections S are identical.

FIG. 5(e) shows a method for testing the buckling rate T of the cross sectional area of the A-pillars 13, 113, 153. Both ends of the fixed-length A-pillars 13, 113, 153 are restrained (fixed), and a predetermined bending load P is applied downward.

The buckling rate T of a cross sectional area is defined as T = S/St, where St is the cross sectional area after a predetermined bending load P is applied.

As shown in FIGS. 4(a) through 4(f), the general A-pillar 113 has no barrier or structural foam filler. The prior-art A-pillar 153 is provided with a barrier 177 and a structural foam filler 181. The A-pillar 13 according to the present embodiment is provided with the first and second barriers 37, 38, as well as the first and second structural foam fillers 41, 42. S1 through S3 form the relationship S1 < S2 < S3, where S1 through S3 represent the cross sectional area St after a predetermined bending load P has been applied to the general A-pillar 113, the prior-art A-pillar 153, and the A-pillar 13 according to the present embodiment, respectively. The buckling rate T of the cross sectional area decreases in the order of the general A-pillar 113, the prior-art A-pillar 153, and the A-pillar 13 according to the present embodiment.

In other words, as compared with the general A-pillar 113 and the prior-art A-pillar 153, the closed cross section of the A-pillar 13 according to the present embodiment can suppress deformation (buckling) and support a large bending load, and impedes bending in a direction orthogonal to the longitudinal direction of the A-pillar 13.

As shown in FIG. 2, the first and second barriers 37, 38 are spot welded to the stiffener panel 33. Therefore, the rigidity of the stiffener panel 33 is further improved.

The space between the inner panel 32 and the first barrier 37 is filled with the first structural foam filler 41. Therefore, a load applied to the inner panel 32 is absorbed by the first structural foam filler 41. The space between the outer panel 31 and the second barrier 38 is filled with the second structural foam filler 42. Therefore, a load applied to the outer panel 31 is absorbed by the second structural foam filler 42.

In other words, the first barrier 37 and the first structural foam filler 41 isolate the first closed cross section 35 in the longitudinal direction, and the second barrier 38 and the second structural foam filler 42 isolate the second closed cross section 36 in the longitudinal direction. Therefore, cross sectional deformation of the A-pillar 13 formed by the outer panel 31, the inner panel 32, and the stiffener panel 33 is impeded (buckling is difficult to occur). As a result, a (bending) load applied to the A-pillar 13 can be stopped while being absorbed.

In the A-pillar 13 according to the present embodiment, the first and second barriers 37, 38 are welded at the same position on the front and back of the stiffener panel 33 when these barriers are welded to the front and back of the stiffener panel 33. Therefore, the first and second barriers 37, 38 can be welded to the stiffener panel 33 at the same time. As a result, it is possible to make it easier to assemble a vehicle body frame 34 or other structure composed of an outer panel 31, an inner panel 32, and a stiffener panel 33.

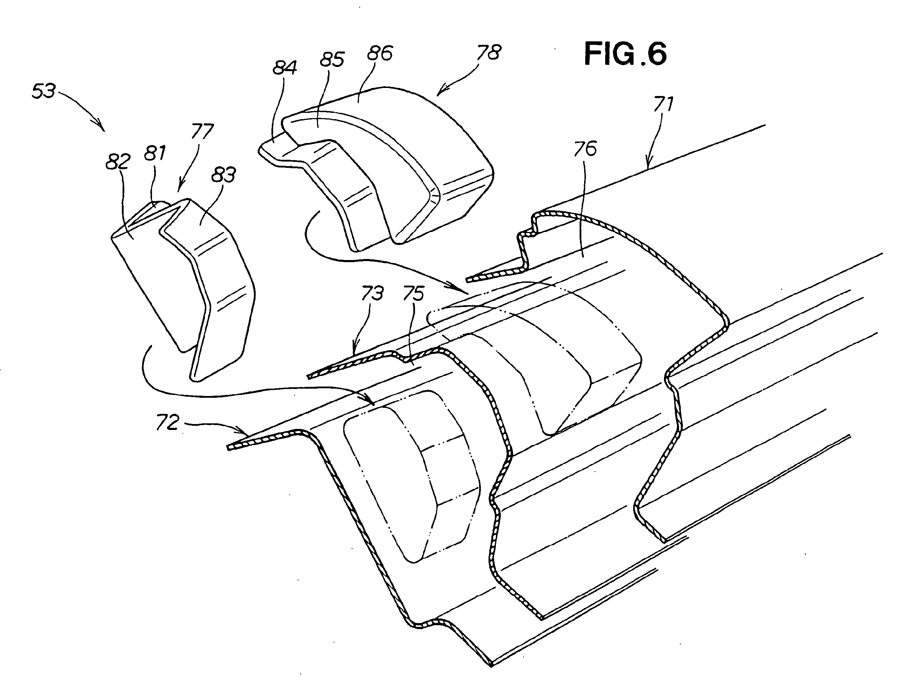

FIG. 6 shows a vehicle body frame structure according to another embodiment of the present invention.

An A-pillar 53 as a vehicle body frame structure according to another embodiment comprises an outer panel 71 disposed on the vehicle exterior, an inner panel 72 disposed in the passenger compartment, a stiffener panel 73 provided between the outer panel 71 and the inner panel 72, a first closed cross section 75 formed from the inner panel 72 and the stiffener panel 73, a second closed cross section 76 formed from the outer panel 71 and the stiffener panel 73, a first barrier 77 provided to the interior of the first closed cross section 75, a first structural foam filler (not shown) disposed between the first barrier 77 and the inner panel 72, a second barrier 78 provided to the interior of the second closed cross section 76, and a second structural foam filler (not shown) disposed between the second barrier 78 and the outer panel 71.

The first barrier 77 is spot welded to the stiffener panel 73 and isolates the first closed cross section 75 in a longitudinal direction of the vehicle body frame.

The second barrier 78 is spot welded to the stiffener panel 73 and isolates the second closed cross section 76 in a longitudinal direction of the vehicle body frame.

The first barrier 77 is composed of a receiving flange 81 for receiving the inner panel 72, a wall portion 82 rising from the flange 81, and a weld flange 83 bent away from the wall portion 82 and welded to the stiffener panel 73.

The second barrier 78 is composed of a weld flange 84 welded to a stiffener panel, a wall portion 85 rising from the weld flange 84, and a receiving flange 86 for receiving the outer panel 71, the receiving flange being bent away from the wall portion 85.

In other words, the A-pillar 53 according to the other embodimen employs the bent first and second barriers 77, 78. The degree of design freedom for the first and second barriers 77, 78 is enhanced thereby.

As shown in FIG. 2, the vehicle body frame structure according to the present embodiment was described using the A-pillar 13 as an example, but the present invention is not limited to this option alone, and any vehicle body frame structure having two closed cross sections can be used.

The vehicle body frame structure according to the present invention can be used in a sedan, station wagon, or other passenger vehicle.

A vehicle body frame structure having two closed cross sections is disclosed. Each of the closed cross sections (35, 36) is isolated in a longitudinal direction of the vehicle body frame (34) by barriers (37, 38) and structural foam fillers (41, 42). The barriers are spot welded (43, 43) to the front and back of a reinforcement panel (33) of the vehicle body frame.

## Claims

1. A vehicle body frame structure comprising:
a vehicle body frame (34) having two closed cross sections (35, 36) defined by a reinforcement panel (33); **characterized by** further comprising
barriers (37, 38) spot-welded (43, 44) to front and back surfaces of the reinforcement panel; and
structural foam fillers (41, 42) interposed between the barriers and the vehicle body frame,
wherein the barriers and the structural foam fillers isolate each of the two closed cross sections aligned in a longitudinal direction of the vehicle body frame.

2. The vehicle body frame structure of claim 1, wherein the barriers and the structural foam fillers are provided on a part of the two closed cross sections aligned in a longitudinal direction of the vehicle body frame.

3. A vehicle body frame structure comprising:
an outer panel (31) disposed on a exterior side of a vehicle;
an inner panel (32) disposed on a passenger compartment side of the vehicle;
a stiffener panel (33) provided between the outer panel and the inner panel;
a first closed cross section (35) defined by the inner panel and the stiffener panel;
a second closed cross section (36) defined by the outer panel and the stiffener panel;
**characterized by** further comprising
a first barrier (37, 77) for isolating the first closed cross section in a longitudinal direction, the first barrier being welded to one of front and back surfaces of the stiffener panel;
a first structural foam filler (41) disposed between the first barrier and the inner panel;
a second barrier (38, 78) for isolating the second closed cross section in a longitudinal direction, the second barrier being welded to the other of the front and back surfaces of the stiffener panel; and
a second structural foam filler (42) disposed between the second barrier and the outer panel.

4. The frame structure of claim 3, wherein the first and second barriers (37, 38, 77, 78) are welded at the same position on the front and back surfaces of the stiffener panel when the barriers are welded to the front and back surfaces of the stiffener panel (33).

5. The frame structure of claim 3, wherein the first and second barriers (77, 78) comprise bent parts.

## Patentansprüche

1. Fahrzeugaufbaurahmenstruktur, umfassend:
einen Fahrzeugaufbaurahmen (34) mit zwei geschlossenen Querschnittsabschnitten (35, 36), die durch eine Verstärkungsplatte (33) begrenzt sind, **dadurch gekennzeichnet, dass** sie ferner umfasst:
Barrieren (37, 38), die an die Vorder- und Rückseiten der Verstärkungsplatte punktgeschweißt sind (43, 44); und Strukturschaumfüller (41, 42), die zwischen die Barrieren und den Fahrzeugaufbaurahmen eingesetzt sind,
wobei die Barrieren und die Strukturschaumfüller jeden der zwei geschlossenen Querschnittsabschnitte, die in Längsrichtung des Fahrzeugaufbaurahmens ausgerichtet sind, isolieren.

2. Die Fahrzeugaufbaurahmenstruktur von Anspruch 1, worin die Barrieren und die Strukturschaumfüller an einem Teil der zwei geschlossenen Querschnittsabschnitte, die in Längsrichtung des Fahrzeugaufbaurahmens ausgerichtet sind, vorgesehen sind.

3. Fahrzeugaufbaurahmenstruktur, umfassend:
eine Außenplatte (31), die an einer Außenseite eines Fahrzeugs angeordnet ist;
eine Innenplatte (32), die an einer Insassenraumseite des Fahrzeugs angeordnet ist;
eine Versteifungsplatte (33), die zwischen der Außenplatte und der Innenplatte vorgesehen ist;
einen ersten geschlossenen Querschnittsabschnitt (35), der durch die Innenplatte und die Versteifungsplatte definiert ist;
einen zweiten geschlossenen Querschnittsabschnitt (36), der durch die Außenplatte und die Versteifungsplatte definiert ist;
**dadurch gekennzeichnet, dass** sie ferner umfasst:
eine erste Barriere (37, 77) zum Isolieren des ersten geschlossenen Querschnittsabschnitts in Längsrichtung, wobei die erste Barriere an eine von Vorder- und Rückseiten der Versteifungsplatte geschweißt ist;
einen ersten Strukturschaumfüller (41), der zwischen der ersten Barriere und der Innenplatte angeordnet ist;
eine zweite Barriere (38, 78) zum Isolieren des zweiten geschlossenen Querschnittsabschnitts in Längsrichtung, wobei die zweite Barriere an die andere der Vorder- und Rückseiten der Versteifungsplatte geschweißt ist; und
einen zweiten Strukturschaumfüller (42), der zwischen der zweiten Barriere und der Außenplatte angeordnet ist.

4. Die Rahmenstruktur von Anspruch 3, worin die ersten und zweiten Barrieren (37, 38, 77, 78) an der gleichen Position an die Vorder- und Rückseiten der Versteifungsplatte geschweißt sind, wenn die Barrieren an die Vorder- und Rückseiten der Versteifungsplatte (33) geschweißt sind.

5. Die Rahmenstruktur von Anspruch 3, worin die ersten und zweiten Barrieren (77, 78) gebogene Teile aufweisen.

## Revendications

1. Structure de châssis de véhicule, comprenant :
un châssis de véhicule (34) ayant deux sections transversales fermées (35, 36) définies par un panneau de renforcement (33) ; **caractérisée en ce qu'**elle comprend en outre :
des barrières (37, 38) soudées par points (43, 44) aux surfaces avant et arrière du panneau de renforcement ; et
des charges de remplissage structurelles en mousse (41, 42) interposées entre les barrières et le châssis de véhicule,
dans laquelle les barrières et les charges de remplissage structurelles en mousse isolent chacune des deux sections transversales fermées alignées dans une direction longitudinale du châssis du véhicule.

2. Structure de châssis de véhicule selon la revendication 1, dans laquelle les barrières et les charges de remplissage structurelles en mousse sont prévues sur une partie des deux sections transversales fermées alignées dans une direction longitudinale du châssis de véhicule.

3. Structure de châssis de véhicule, comprenant :
un panneau externe (31) disposé sur un côté extérieur d'un véhicule ;
un panneau interne (32) disposé sur un côté du compartiment de passagers du véhicule ;
un panneau raidisseur (33) prévu entre le panneau externe et le panneau interne ;
une première section transversale fermée (35) définie par le panneau interne et le panneau raidisseur ;
une seconde section transversale fermée (36) définie par le panneau externe et le panneau raidisseur ;
**caractérisée en ce qu'**elle comprend en outre :
une première barrière (37, 77) pour isoler la première section transversale fermée dans une direction longitudinale, la première barrière étant soudée à l'une parmi les surfaces avant et arrière du panneau raidisseur ;
une première charge structurelle en mousse (41) disposée entre la première barrière et le panneau interne ;
une seconde barrière (38, 78) pour isoler la seconde section transversale fermée dans une direction longitudinale, la seconde barrière étant soudée à l'autre parmi les surfaces avant et arrière du panneau raidisseur ; et
une seconde charge structurelle en mousse (42) disposée entre la seconde barrière et le panneau externe.

4. Structure de châssis de véhicule selon la revendication 3, dans laquelle les première et seconde barrières (37, 38, 77, 78) sont soudées à la même position sur les surfaces avant et arrière du panneau raidisseur lorsque les barrières sont soudées aux surfaces avant et arrière du panneau raidisseur (33).

5. Structure de châssis de véhicule de la revendication 3, dans laquelle les première et seconde barrières (77, 78) comprennent des parties fléchies.
